# EUROPÄISCHE PATENTANMELDUNG

(11) **EP 2 039 717 A1**
(43) Veröffentlichungstag der Anmeldung: **25.03.2009**
(21) Anmeldenummer: 07018238.1
(22) Anmeldetag: 18.09.2007
(51) Int. Cl.: C08G 77/04, C08G 77/38, C08G 77/388, C08G 77/44, C07F 7/18

(54) **Dimere und oligomere Silane und deren Umsetzungsprodukte mit Organosiloxanen**

(71) Anmelder: Huntsman Textile Effects (Germany) GmbH, 86462 Langweid a. Lech (DE)
(72) Erfinder: Chrobaczek, Harald, Dr., 86153 Augsburg (DE); Süss, Sabrina, 86647 Lauterbach (DE); Tschida, Günther, 86830 Schwabmünchen (DE)

(57) **Zusammenfassung**

Beschrieben werden dimere und/oder oligomere Silane und deren Umsetzungsprodukte mit Organosiloxanen.

Die dimeren oder oligomeren Silane oder Gemische davon lassen sich herstellen durch Umsetzung von Silanen, welche 2 oder 3 OR-Gruppen enthalten, mit Wasser. Die weitere Umsetzung dieser dimeren und/oder oligomeren Silane mit Organosiloxanen führt zu Polysiloxanen mit funktionellen Gruppen. Die entstehenden Polysiloxane eignen sich unter anderem zur Beschichtung von textilen Flächengebilden.

## Beschreibung

Die Erfindung betrifft dimere oder oligomere Silane oder Gemische davon und die Umsetzungsprodukte dieser Silane mit Organosiloxanen. Sie betrifft ferner die Verwendung der bei dieser Umsetzung erhaltenen Polyorganosiloxane zur Beschichtung textiler Flächengebilde.

Polysiloxane, welche Acrylatogruppen enthalten, sind bekannt, z.B. aus der DE-A 102 19 734, EP-A 564 253, US-A 4 528 081 und der EP-A 373 659 und der US 6 211 322 B1. Aus der oben genannten Literatur geht außerdem hervor, dass es bekannt ist, Silicumverbindungen, welche Acrylateinheiten enthalten, durch radikalische Polymerisation zu härten. Diese radikalische Polymerisation kann z.B. durch UV-Bestrahlung erfolgen.
Gemäß dem Stand der Technik lassen sich Polyorganosiloxane mit funktionellen Gruppen, z.B. Acrylatgruppen, in Seitenketten herstellen durch Kondensations- oder Äquilibrierungsreaktionen. Hierbei werden Polyorganosiloxane mit monomeren, reaktive Gruppen tragenden, Silanen umgesetzt, wobei im Fall von Kondensationsreaktionen als Ausgangsverbindungen Polysiloxane mit endständigen OH-Gruppen verwendet werden.
Die aus dem Stand der Technik bekannten Polyorganosiloxane mit reaktiven Gruppen in Seitenketten enthalten die Seitenketten in statistischer Verteilung. Die Reaktivität solcher Polysiloxane, z.B. bezüglich ihrer schnellen Härtbarkeit oder bezüglich der mit ihnen erzielbaren ölabweisenden Effekte, ist nicht in allen Fällen befriedigend.

Der vorliegenden Erfindung lag die Aufgabe zugrunde, Silane zur Verfügung zu stellen, aus welchen sich nach Umsetzung mit Polyorganosiloxanen Polymere erhalten lassen, die eine erhöhte Reaktivität, z.B. in Härtungsprozessen besitzen bzw. die geeignet sind, bestimmte Effekte zu verbessern, z. B. die ölabweisende Wirkung von mit diesen Polymeren behandelten Fasermaterialien.
Die Aufgabe wurde gelöst durch dimere und/oder oligomere Silane, herstellbar durch Umsetzung eines Silans der Formel (I) 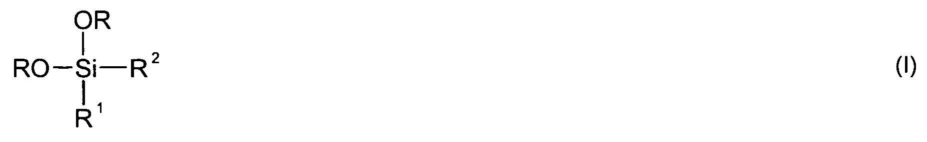 oder eines Gemischs solcher Silane, mit Wasser, oder eines Gemischs aus einem Silan der Formel (I) und einer Verbindung der Formel (Ia), mit Wasser,

X(OR¹⁵)₄ (Ia)

wobei X für Si oder Ti steht,
worin alle Reste R¹⁵ unabhängig voneinander für R oder für 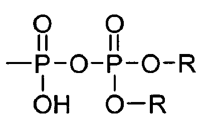 oder vorzugsweise für -CH(CH₃)₂ stehen,
wobei pro Mol Silan oder Silangemisch 0,5 bis 1,5 Mol Wasser verwendet werden, zu einem dimeren und/oder oligomeren Produkt, welches 2 bis 200, insbesondere 2 bis 50, besonders bevorzugt 2 bis 15, Siliciumatome im Molekül enthält, oder zu einem Gemisch solcher dimerer oder oligomerer Produkte,
wobei gegebenenfalls in einem ersten Schritt zuerst zwei gleiche oder unterschiedliche Silane der Formel (I) zu einem Dimeren oder Oligomeren miteinander umgesetzt werden und dann dieses Dimere oder Oligomere mit Wasser unter den oben genannten Bedingungen weiter umgesetzt wird,
wobei alle anwesenden Reste R unabhängig voneinander für den Phenylrest oder für einen verzweigten oder unverzweigten Alkylrest mit 1 bis 18 Kohlenstoffatomen, vorzugsweise für CH₃ oder C₂H₅ stehen,
R¹ für R oder OR oder für 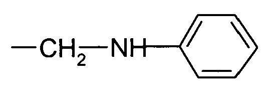 steht,
worin R² für einen Rest einer der Formeln (XI), (XIa) oder (XII) bis (XX) oder der Formel (XVIIIa) oder Formel (XXa) oder Formel (XXb) oder Formel (XXc) steht 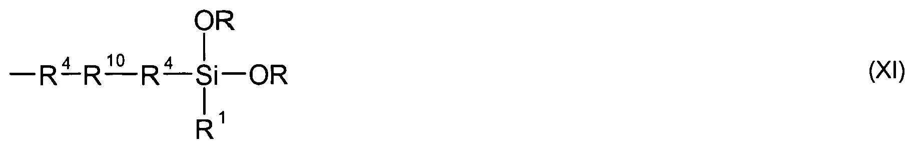 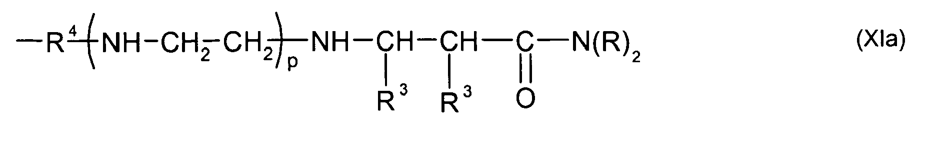 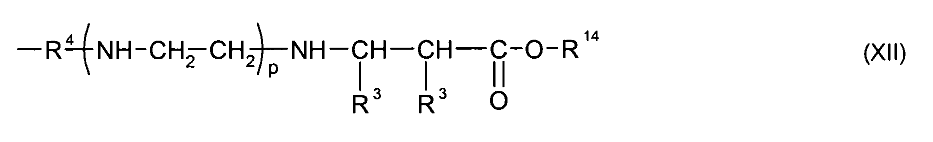 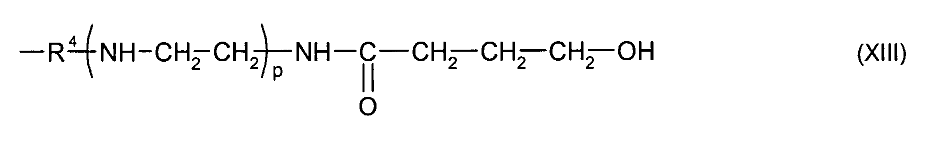 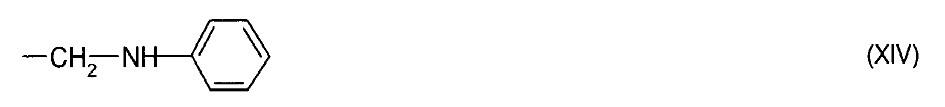 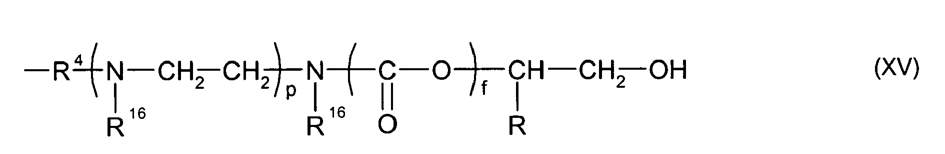 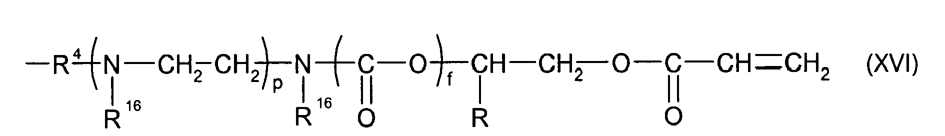 worin p für 0, 1 oder 2 steht,
R⁴ für einen zweiwertigen linearen oder verzweigten Kohlenwasserstoffrest mit 1 bis 4 Kohlenstoffatomen steht,
R³ jeweils für H oder CH₃ steht,
R¹⁴ für H oder einen linearen oder verzweigten Alkylrest mit 1 bis 18 Kohlenstoffatomen oder für einen Rest der Formel (XIX) steht,
worin die einzelnen Einheiten -(CH₂-CH₂-O)- und -(CHR³-CHR³-O)- beliebig über die Kette verteilt sein können, worin k und I jeweils eine Zahl im Bereich von 1 bis 22 sind und die Summe k+l im Bereich von 3 bis 25 liegt,
worin f für 0 oder 1 steht,
alle Reste R¹⁶ unabhängig voneinander für H oder für 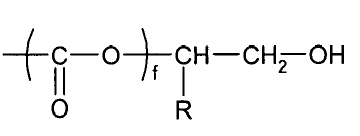 oder für 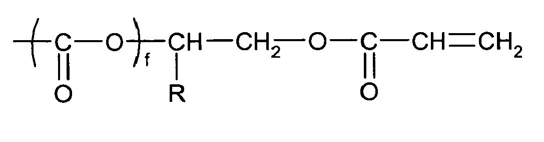 stehen, 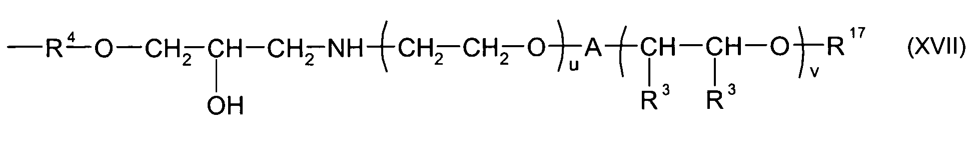 worin A für eine direkte Bindung oder für einen zweiwertigen Rest der Formel 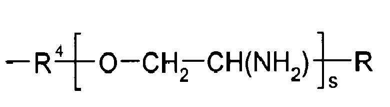 steht, wobei die Werte von u, v und s so gewählt sind, dass das Äquivalentgewicht dieses Restes R² im Bereich von 100 bis 5000 liegt, wobei eine oder zwei der Einheiten u, v und s auch den Wert 0 annehmen können und wobei die einzelnen Einheiten -CH₂-CH₂-O- und 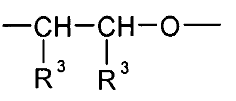 beliebig über die Kette verteilt sein können,
wobei R¹⁷ für R oder für -R⁴-NH₂ oder für 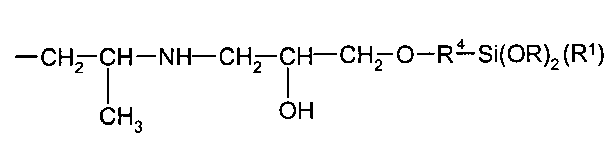 steht, 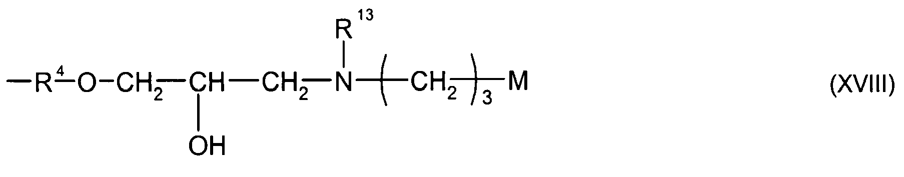 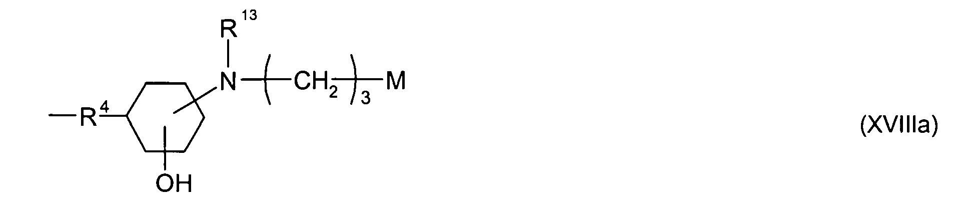 wobei M ausgewählt ist aus 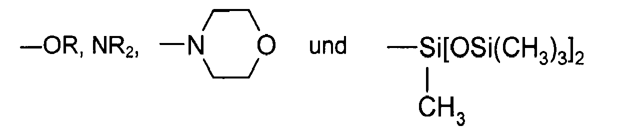 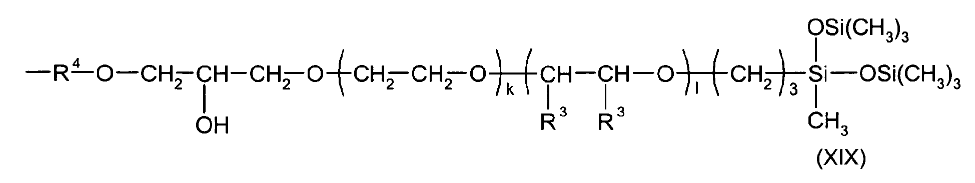 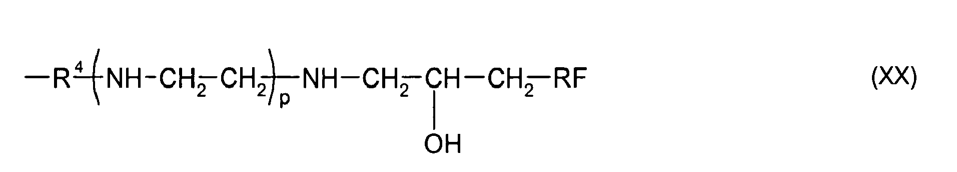 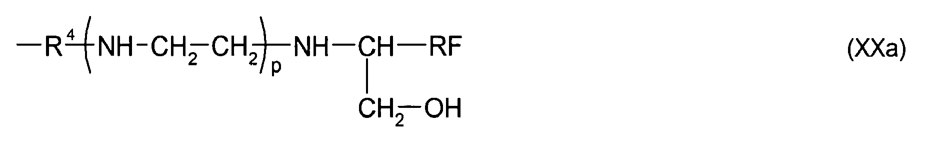 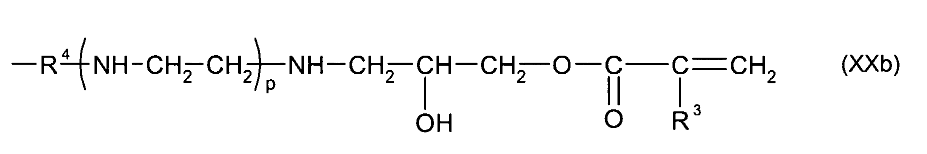 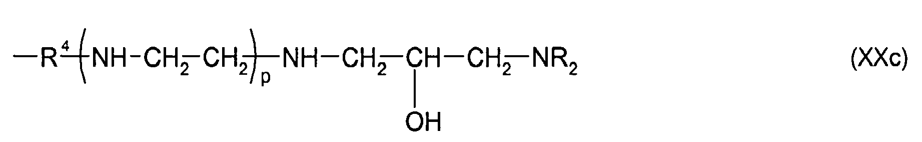 worin RF für einen Perfluoralkylrest mit 5 bis 23 Kohlenstoffatomen steht,
worin R¹⁰ für einen zweiwertigen Rest einer der Formeln (XXI) bis (XXIVa) steht 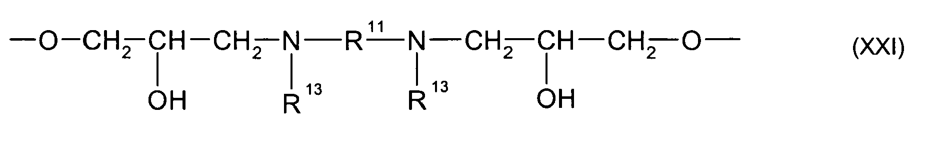 worin R¹³ für H oder -CH(CH₃)₂ oder für -CH₂-CH(CH₃)₂ steht, 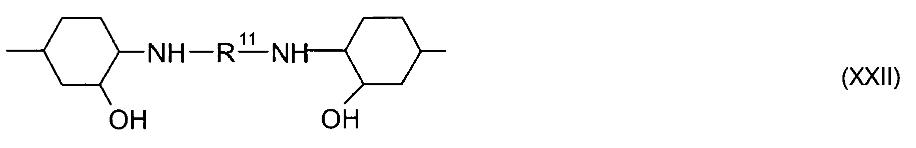 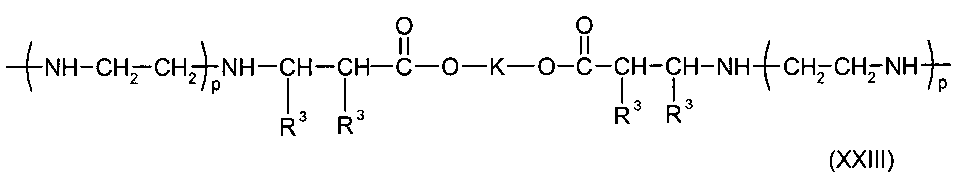 worin K für einen linearen oder verzweigten Alkylenrest mit 2 bis 18 Kohlenstoffatomen steht, 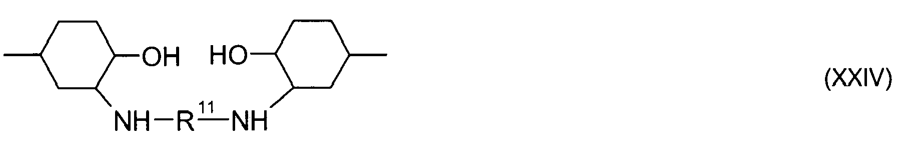 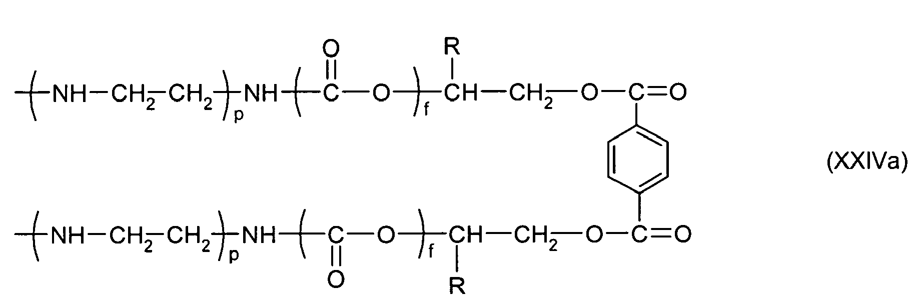 worin f für 0 oder 1 steht
wobei jeder der Reste R¹¹ für 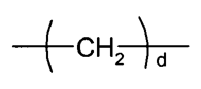 worin d eine Zahl von 1 bis 6 ist,
oder für einen Rest einer der Formeln (XXV) bis (XXXI) steht, 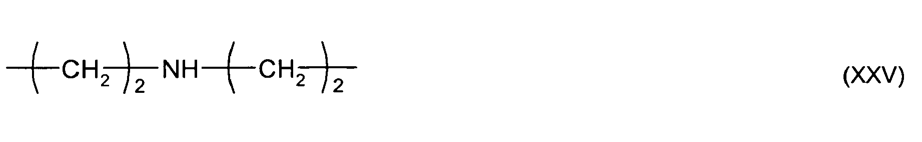 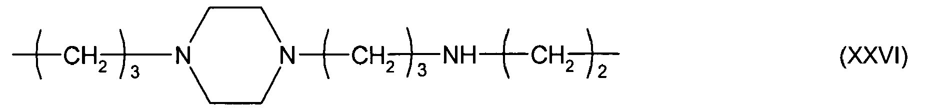 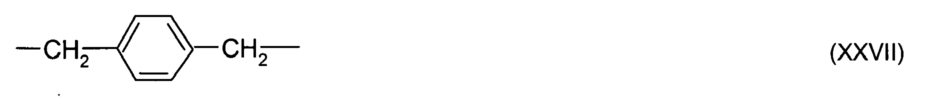 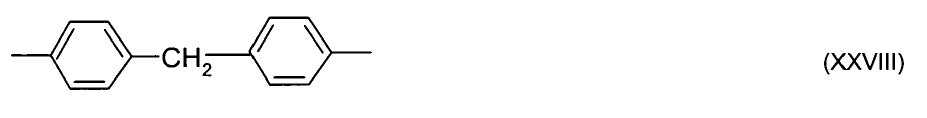 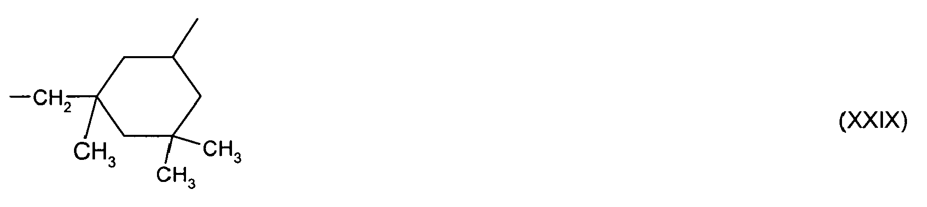 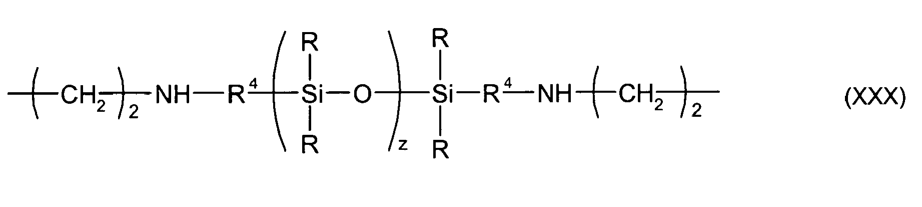 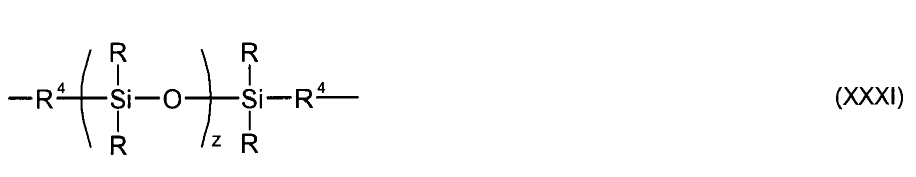 worin z eine Zahl von 8 bis 500, vorzugsweise von 8 bis 20, ist,
wobei alle oder ein Teil der Stickstoffatome, welche in den oben genannten Formeln vorhanden sind und die nicht Teil einer Amidgruppe sind, in quaternisierter Form vorliegen können.
Die erfindungsgemäßen dimeren/oligomeren Silane eignen sich zur Behandlung von textilen Flächengebilden wie z.B. Geweben.

Die Umsetzung der erfindungsgemäßen dimeren bzw. oligomeren Silane oder von Gemischen dieser Silane mit Organosiloxanen der Formel (VIII) führt zu neuen Polyorganosiloxanen, in denen die aus den Silanen stammenden reaktiven Gruppen in Seitenketten in Blockform vorliegen, während Produkte aus dem Stand der Technik die reaktiven Seitenketten in statistischer Verteilung aufweisen. Es wurde überraschenderweise gefunden, dass diese neuen Polyorganosiloxane einerseits ausgezeichnete Reaktivität, insbesondere bei Härtungsprozessen, aufweisen können und andererseits verbesserte Effekte von mit ihnen behandelten Fasermaterialien bewirken können wie z. B. erhöhte ölabweisende Wirkung. Vorteile resultieren insbesondere auch dann, wenn die in den Silanen anwesenden funktionellen Gruppen (R²) Acrylatreste enthalten, siehe z.B. Formel (XVI). Diese Acrylatreste sind dann auch in den nach Umsetzung mit Organosiloxanen erhaltenen Produkten enthalten und lassen sich härten bzw. polymerisieren, z.B. durch UV-Strahlung. Dies macht die neuen Polysiloxane gut geeignet für Beschichtungsprozesse, z.B. Beschichtung von textilen Flächengebilden. Auch Glasfasergewebe können mit diesen neuen Polysiloxanen behandelt werden. Daneben lassen sich Glasfasergewebe auch mit erfindungsgemäßen dimeren/oligomeren Silanen behandeln und anschließend härten bzw. unter Alkoholabspaltung kondensieren. Das Aufbringen der erfindungsgemäßen dimeren/oligomeren Silane oder der erfindungsgemäßen neuen Polysiloxane auf die textilen Flächengebilde oder auf die Glasfasergewebe kann nach bekannten Methoden erfolgen, z.B. durch Beschichtung oder Foulardierung (Badimprägnierung).

Als Ausgangssubstanzen zur Herstellung erfindungsgemäßer Silane werden Silane der Formel (I) 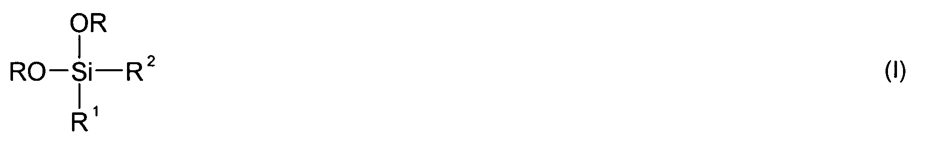 verwendet. Es kann eine einzige Verbindung der Formel (I) eingesetzt werden oder ein Gemisch solcher Silane. Das Silan oder Silangemisch wird mit Wasser in solchen Mengenverhältnissen umgesetzt, dass pro Mol Silan 0,5 bis 1,5 Mol Wasser verwendet werden. Verwendet man ein Gemisch von Silanen der Formel (I), so sind natürlich die Molzahlen der einzelnen im Gemisch anwesenden Silane zu addieren, um die erforderliche Menge Wasser zu berechnen. Die beschriebene Umsetzung der Silane der Formel (I) mit Wasser führt zu einem dimeren oder oligomeren Produkt oder einem Gemisch solcher Produkte. Dieses enthält durchschnittlich 2 bis 200, insbesondere 2 bis 50 und besonders bevorzugt 2 bis 15 Siliciumatome im Molekül. Im Normalfall ist das entstehende Produkt ein Gemisch, das dimere und oligomere Silane enthält. Diese dimeren oder oligomeren Silane werden bei der Umsetzung der Silane der Formel (I) mit Wasser dadurch gebildet, dass 2 OR-Gruppen zweier unterschiedlicher Silan-Moleküle in Gegenwart von Wasser unter Abspaltung von ROH zu Verbindungen reagieren, welche Si-O-Si-Bindungen aufweisen. Die Anzahl von Siliciumatomen, welche das entstehende Gemisch durchschnittlich pro Molekül enthält, sowie das relative Mengenverhältnis von Dimeren zu Oligomeren lässt sich in dem Chemiker bekannter Weise durch die Reaktionsbedingungen steuern, so z.B. durch das Verhältnis der Menge der eingesetzten Silane zur Menge an Wasser. Als Silane der Formel (I) werden vorzugsweise Verbindungen verwendet, die bei Raumtemperatur flüssig sind. Sollen Silane fester Konsistenz eingesetzt werden, empfiehlt sich die Verwendung eines Lösungsmittels, das unter den Bedingungen der Umsetzung der Silane mit Wasser nicht reagiert. Als Beispiel für Lösungsmittel seien niedrigmolekulare Dialkylketone genannt.

Die Umsetzung der Silane der Formel (I) mit Wasser erfolgt bevorzugt bei einer Temperatur, die 5-10°C höher liegt als der Siedepunkt der aus den Silanen entstehenden Alkohole ROH, und bei der Umsetzung wird bevorzugt der aus Silan und Wasser entstehende Alkohol ROH direkt abdestilliert, ggf. unter vermindertem Druck. Gegebenenfalls ist es von Vorteil, für die Umsetzung von Silan mit Wasser einen Katalysator zuzusetzen. Geeignete Katalysatoren werden unten beschrieben.

Die Silane der Formel (I) enthalten zwei oder drei an ein Si-Atom gebundene OR-Gruppen. Falls der Rest R¹ in Formel (I) für OR steht, liegen 3 OR-Gruppen vor. Aus Silanen mit 2 oder 3 OR-Gruppen können nach Dimerisierung/Oligomerisierung und anschließend weiterer Umsetzung mit α, w-Dihydroxy-dialkyl-polysiloxanen, die unten beschrieben wird, Polysiloxane erhalten werden, welche 2 oder mehr benachbarte reaktive Gruppen in Blockform enthalten. Diese reaktiven Gruppen stammen aus den Resten R² der Silane der Formel (I).

In einer Reihe von Fällen ist es von Vorteil, nicht Silane der Formel (I) mit Wasser umzusetzen, sondern zuerst zwei gleiche oder unterschiedliche Silane der Formel (I) zu einem Dimeren oder Oligomeren, das noch OR-Gruppen enthält, miteinander umzusetzen und dann in einem zweiten Schritt das gebildete Dimere oder Oligomere mit Wasser umzusetzen. Hierbei erfolgt die Umsetzung mit Wasser unter den oben bereits genannten Bedingungen. Hierbei entstehen dimere/oligomere erfindungsgemäße Silane, wie sie auch durch die beschriebene Umsetzung von Silanen der Formel (I) mit Wasser hergestellt werden können.

In Formel (I) stehen alle anwesenden Reste R unabhängig voneinander für den unsubstituierten Phenylrest oder für einen Alkylrest mit 1 bis 18 Kohlenstoffatomen. Bevorzugt steht jeder Rest R für den Methyl- oder den Ethylrest.
Der Rest R¹ steht entweder für einen Rest R der genannten Bedeutung oder für einen Rest

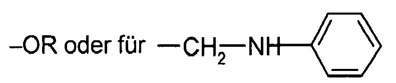

Für den Rest R² in den Silanen der Formel (I) können folgende unterschiedliche Möglichkeiten in Frage kommen:
R² kann für einen Rest einer der Formeln (XI), (XIa) oder (XII) bis (XX) oder der Formel (XVIIIa) oder (XXa) oder (XXb) oder (XXc) stehen, 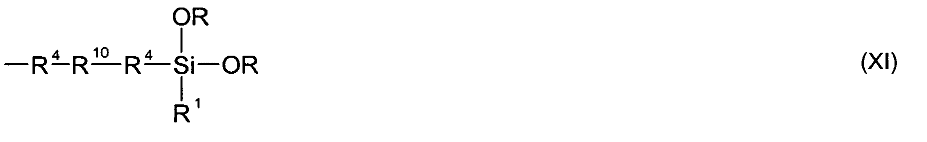 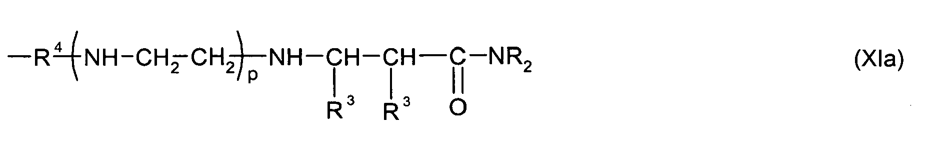 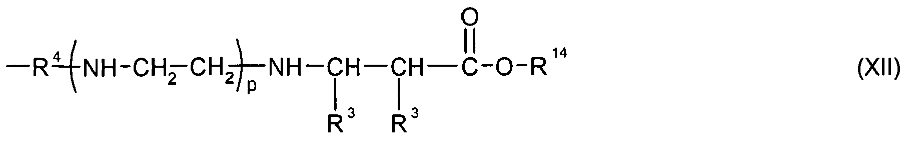 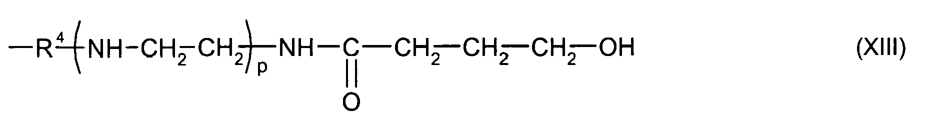 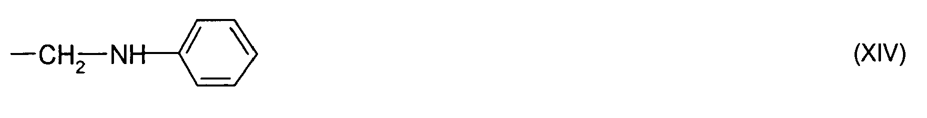 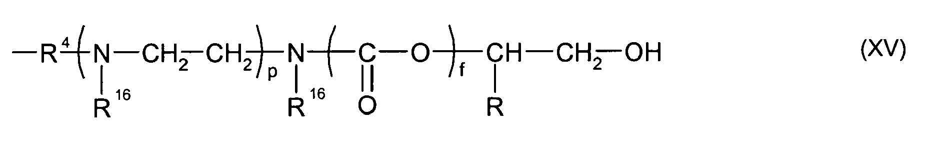 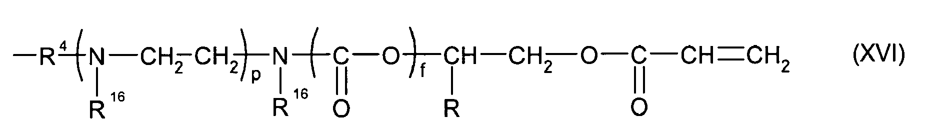
wobei f für 0 oder 1 steht,
worin alle Reste R¹⁶ unabhängig voneinander für H oder für 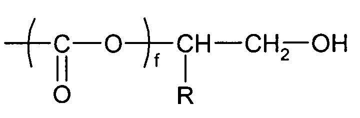 oder für 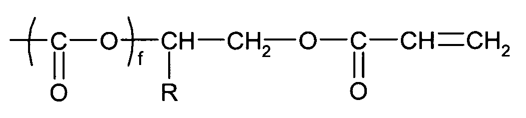 stehen, 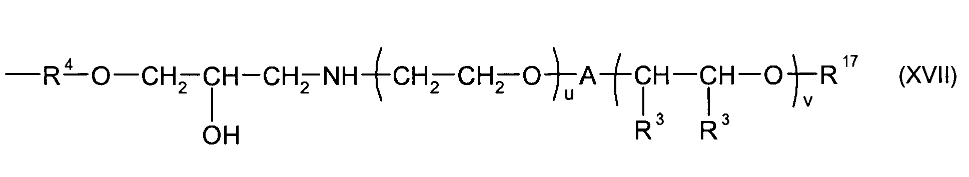 worin A für eine direkte Bindung oder für einen zweiwertigen Rest der Formel 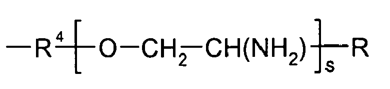 steht, wobei die Werte von u, v und s so gewählt sind, dass das Äquivalentgewicht dieses Restes R² im Bereich von 100 bis 5000 liegt, wobei eine oder zwei der Einheiten u, v und s auch den Wert 0 annehmen können und wobei die einzelnen Einheiten -CH₂-CH₂-O- und 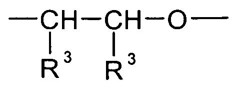 beliebig über die Kette verteilt sein können,
wobei R¹⁷ für R oder für -R⁴-NH₂ oder für 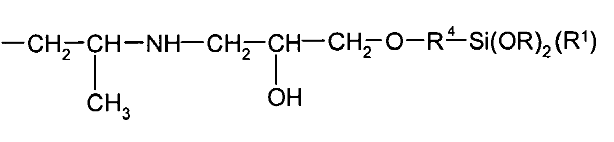 steht, 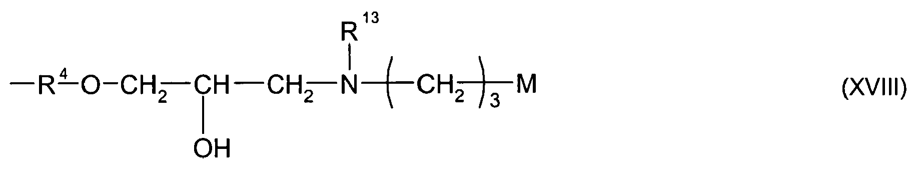 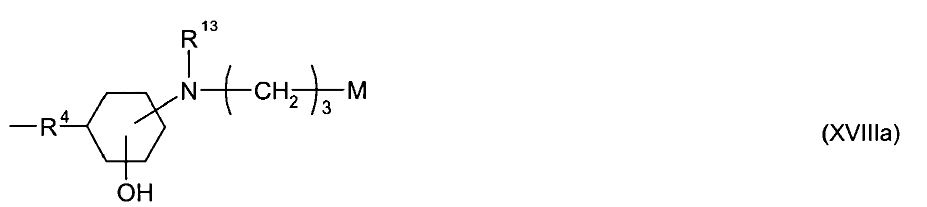 wobei M ausgewählt ist aus 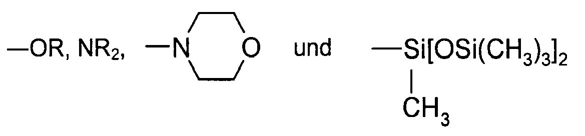 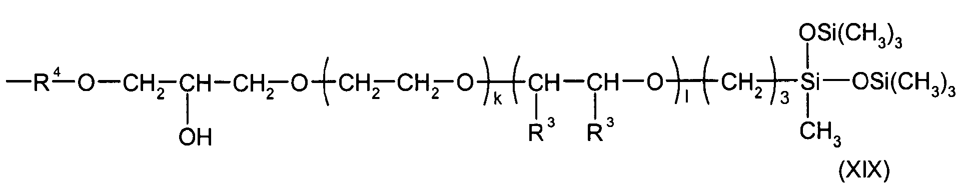 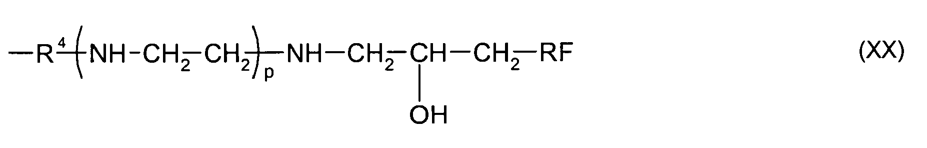 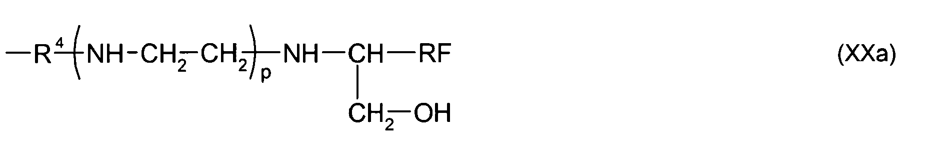 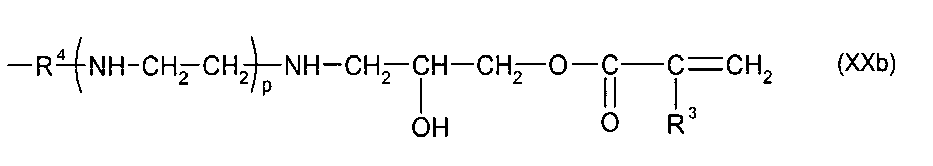 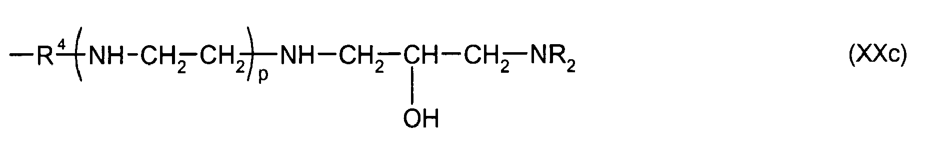 worin RF für einen Perfluoralkylrest mit 5 bis 23 Kohlenstoffatomen steht.

Hierin bedeuten:
R³ Wasserstoff oder die Methylgruppe,
R⁴ einen zweiwertigen linearen oder verzweigten Kohlenwasserstoffrest mit 1 bis 4 Kohlenstoffatomen,
R¹⁴ Wasserstoff oder einen linearen oder verzweigten Alkylrest mit 1 bis 16 Kohlenstoffatomen oder einen Rest der Formel (XIX),
R¹⁰ einen zweiwertigen Rest einer der Formeln (XXI) bis (XXIVa), 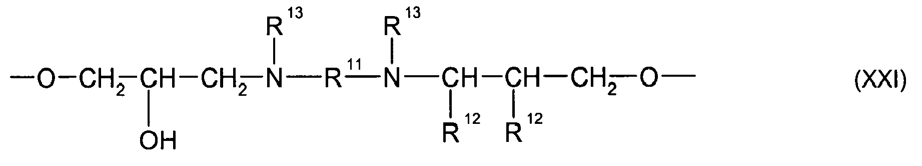 worin R¹³ für H oder -CH(CH₃)₂ oder für -CH₂-CH(CH₃)₂ steht, 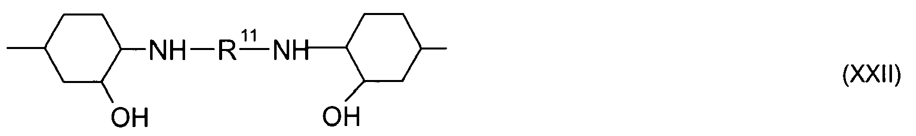 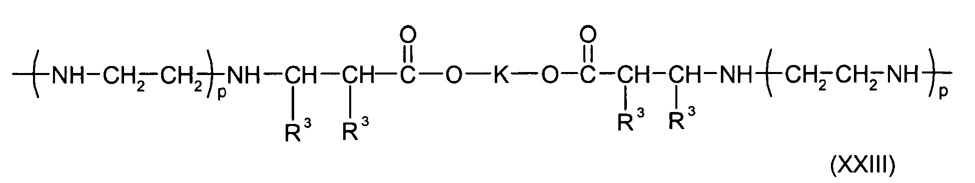 worin K für einen linearen oder verzweigten Alkylenrest mit 2 bis 18 Kohlenstoffatomen steht, 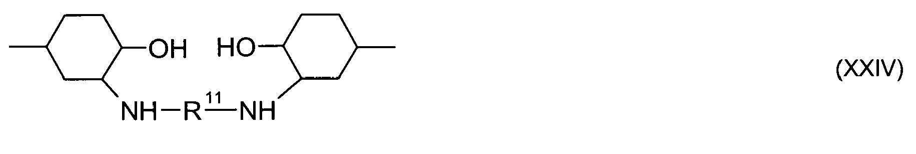 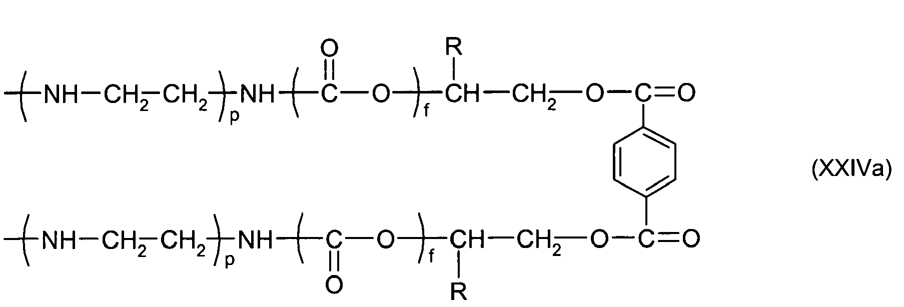 worin f für 0 oder 1 steht,
   wobei jeder der Reste R¹¹ für 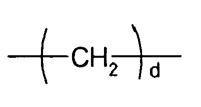 worin d eine Zahl von 1 bis 6 ist,
   oder für einen Rest einer der Formeln (XXV) bis (XXXI) steht, 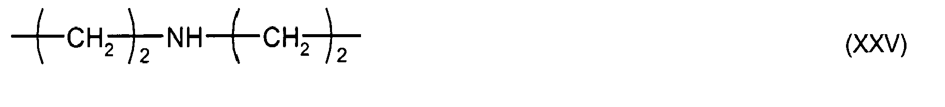 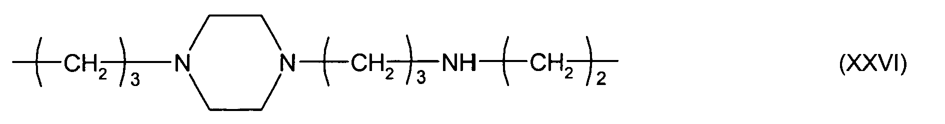 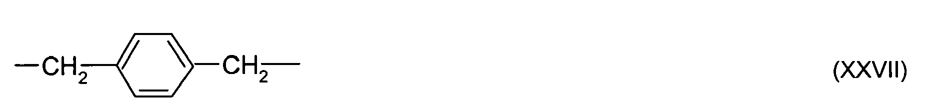 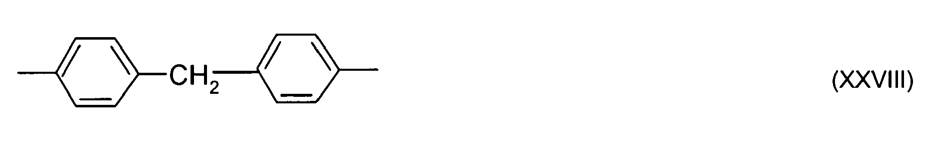 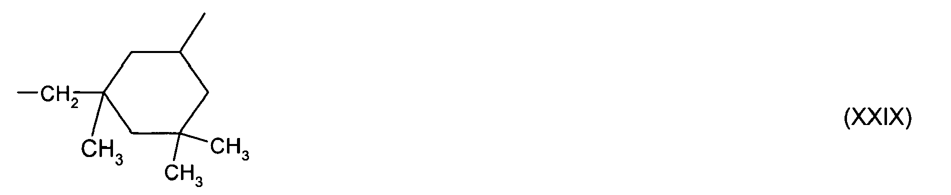 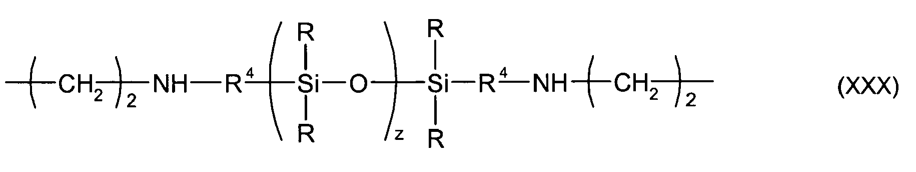 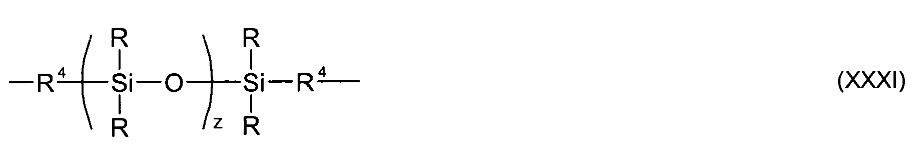 wobei alle oder ein Teil der Stickstoffatome, welche in den in dieser Beschreibung genannten Formeln vorhanden sind und die nicht Teil einer Amidgruppe sind, in quaternisierter Form vorliegen können.
   In den Formeln (XXX) und (XXXI) steht z jeweils für eine Zahl von 8 bis 500, vorzugsweise von 8 bis 20.

Sehr gut geeignet für die Dimerisierung/Oligomerisierung in Gegenwart von Wasser und für die unten beschriebene nachfolgende Umsetzung mit Organosiloxanen sind Silane der Formel (I), in denen alle Reste R unabhängig voneinander für CH₃ oder für -CH₂-CH₃ stehen.

Die Silane der Formel (I) sind auf dem Markt erhältliche Produkte oder können nach Methoden hergestellt werden, die dem Chemiker bekannt sind. Mögliche Synthesen sind die Umsetzung eines Silans, das eine Si-H-Bindung und 2 oder 3 an Si gebundene Chloratome enthält, mit Allylverbindungen.
Silane der Formel (I), in denen der Rest R² ein Rest der Formel (XI) und R¹⁰ ein Rest der Formel (XXIII) ist, können erhalten werden, indem man ein aminofunktionelles Silan (Formel (I) mit R¹ = R und R² = -R⁴-NH₂) mit einem Alkylendiacrylat umsetzt.

Silane, bei denen der Rest R¹⁰ ein Rest einer der Formeln (XVII), (XVIII) oder (XX) ist, können erhalten werden durch Umsetzung entsprechender Epoxide mit entsprechenden Aminen.

Silane der Formel (XII) mit R¹⁴ = Alkylrest können erhalten werden durch Umsetzung von 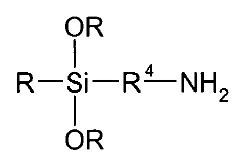 mit einem Acrylsäureester.

Silane der Formel (I), in welchen der Rest R² Acrylateinheiten oder Methacrylateinheiten enthält, sind auf dem Markt erhältlich, z.B. von der Firma ABCR GmbH & Co., Karlsruhe, DE. Ferner können solche Silane, z. B. der Formel (XVI), hergestellt werden, indem man 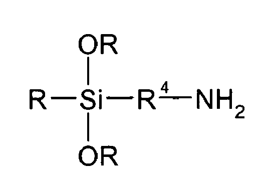 mit einem Alkylencarbonat umsetzt und anschließend mit Acrylsäure(-ester) umsetzt.

Bei der Umsetzung der Silane der Formel (I) mit Wasser wird gegebenenfalls ein Katalysator oder ein Gemisch von Katalysatoren mitverwendet. Als Katalysatoren sind geeignet basische oder saure Katalysatoren, wie z.B. Kaliumhydroxid oder Mineralsäuren oder Katalysatoren, welche unten für die Umsetzung der erfindungsgemäßen Silane mit Organosiloxan der Formel (VIII) genannt sind.

Die Umsetzung der Silane der Formel (I) oder der Gemische solcher Silane mit Wasser kann im Normalfall bei Raumtemperatur durchgeführt werden. Es kann aber ggf. auch bei etwas erhöhter Temperatur gearbeitet werden, bevorzugt bei einer Temperatur, die etwas höher liegt als der Siedepunkt des abzuspaltenden Alkohols ROH. Die Reaktionszeit kann, je nach Art und Menge der Ausgangsverbindungen, wenige Minuten bis zu mehreren Tagen betragen. Für den Fall, dass flüssige Silane der Formel (I) eingesetzt werden, kann ohne Verwendung eines zusätzlichen Lösungsmittels gearbeitet werden.

Erfindungsgemäße dimere oder oligomere Silane lassen sich für die Modifikation von Carbon-Nanotubes verwenden oder für die Behandlung von Flächengebilden aus Polypropylenfasern oder für die Modifikation von Epoxidharzen.

Erfindungsgemäße dimere oder oligomere Silane oder Gemische davon sind besonders gut geeignet für die Herstellung neuartiger Polyorganosiloxane. Diese neuartigen Polyorganosiloxane sind besonders gut geeignet für die Behandlung oder Beschichtung von textilen Flächengebilden und können hergestellt werden durch Umsetzung eines dimeren und/oder oligomeren Silans gemäß Anspruch 1 oder 2 oder eines Gemischs solcher Silane mit einem Organosiloxan der Formel (VIII) 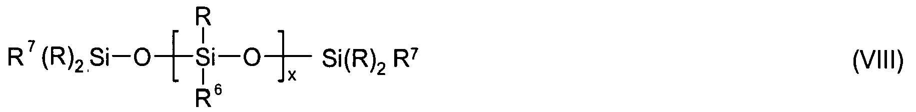 wobei R⁶ für einen Rest R der genannten Bedeutung oder für einen Rest der Formel (IX) steht

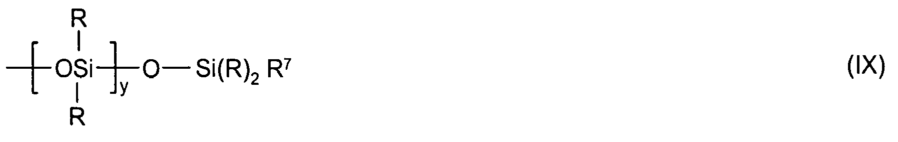

Die Verbindungen der Formel (VIII) werden im Folgenden der Einfachheit halber als "Polyorganosiloxane" bezeichnet, obwohl es sich für niedrige Werte von x um Oligo-organosiloxane handelt.
In Formel (VIII) ist
x eine Zahl von 0 bis 1500, vorzugsweise 10 bis 1500, und
y eine Zahl von 0 bis 500,
ferner stehen in den Formeln (VIII) und (IX) alle anwesenden Reste R⁷ für R oder OH oder für eine Gruppe OR, wobei R die oben genannte Bedeutung besitzt, wobei das Organosiloxan der Formel (VIII) vorzugsweise mindestens einen Rest R⁷ enthält, der für eine Hydroxygruppe steht. Für die Umsetzung der erfindungsgemäßen dimeren oder oligomeren Silane oder von Gemischen dieser Silane mit Polyorganosiloxanen der Formel (VIII) werden vorzugsweise das Polyorganosiloxan und das dimere oder oligomere Silan in solchen Mengenverhältnissen eingesetzt, dass pro Siliciumatom des Polyorganosiloxans 0,001 bis 5 Siliciumatome des dimeren oder oligomeren Silans zum Einsatz kommen.
Die für diese Umsetzung verwendeten Polyorganosiloxane der Formel (VIII) enthalten mindestens zwei Reste R⁷ an den Enden der Polysiloxankette. Jeder Rest R⁷ steht für einen Rest R der oben genannten Bedeutung oder für eine Hydroxygruppe oder für eine Gruppe -OR, wobei R die oben genannte Bedeutung besitzt. Vorzugsweise ist mindestens einer der anwesenden Reste R⁷ eine OH-Gruppe. Besonders gut geeignet sind Polysiloxane der Formel (VIII), in denen zwei der anwesenden Reste R⁷ für OH stehen.
Die für die Umsetzung verwendeten Polyorganosiloxane können ferner, obwohl dies in Formel (VIII) nicht zum Ausdruck kommt, weitere funktionelle Gruppen in Seitenketten enthalten, z.B. Aminogruppen. In diesem Fall stehen einer oder mehrere der anwesenden Reste R⁶ für einen Rest mit einer solchen funktionellen Gruppe.
Außerdem können zusätzlich zu Polyorganosiloxanen der Formel (VIII) weitere Organosiloxane mitverwendet werden, z.B. niedrigmolekulare Oligodialkylsiloxane.

Es ist besonders vorteilhaft, wenn für die Umsetzung der erfindungsgemäßen dimeren bzw. oligomeren Silane mit Polyorganosiloxan der Formel (VIII) ein Polyorganosiloxan der Formel (VIII) verwendet wird, bei dem zwei der anwesenden Reste R⁷ jeweils für eine OH-Gruppe stehen und dass die Umsetzung bei einer Temperatur im Bereich von 80 bis 120°C durchgeführt wird.

Werden für die Umsetzung der erfindungsgemäßen dimeren bzw. oligomeren Silane mit Polyorganosiloxanen solche Polyorganosiloxane der Formel (VIII) verwendet, in denen keiner der Reste R⁷ für OH steht, so findet die Umsetzung unter den aus der Silikonchemie bekannten Bedingungen der Äquilibrierung statt, wobei ein Einbau der Silanstruktur in die Polysiloxankette erfolgt.

Ist dagegen einer oder mehrere der anwesenden Reste R⁷ eine OH-Gruppe, so können Kondensationsreaktionen zwischen diesen OH-Gruppen und OR-Gruppen des dimeren bzw. oligomeren Silans unter Abspaltung von Alkohol ROH stattfinden.
Bevorzugt wird die Umsetzung der Silane der Formel (I) mit Polysiloxanen der Formel (VIII) so durchgeführt, daß eine Kondensation stattfindet.
Die für die Äquilibrierungs- bzw. Kondensationsreaktionen erforderlichen Bedingungen sind aus der Fachliteratur über Silikone bekannt. Vorzugsweise erfolgen die Umsetzungen, welche zu den neuartigen Polyorganosiloxanen führen, unter Mitverwendung eines Katalysators oder Katalysatorgemischs und bei einer Temperatur im Bereich von 80 bis 130°C. Als Katalysatoren geeignet sind gegebenenfalls Lewis-Säuren oder verdünnte Mineralsäuren. Bevorzugt jedoch sind basische Katalysatoren wie Alkalimetallhydroxide oder -alkoholate, oder die weiter unten genannten Katalysatoren.

Besonders gut geeignet sind, wie bereits erwähnt, Polyorganosiloxane der Formel (VIII), in denen zwei der anwesenden Reste R⁷ jeweils für eine OH-Gruppe stehen.

Die genannten Hydroxygruppen enthaltenden Polyorganosiloxane, die im Folgenden mit "α,ω-Dihydroxypolyorganosiloxane" bezeichnet werden, werden also mit erfindungsgemäßen dimeren bzw. oligomeren Silanen umgesetzt. Diese Umsetzung kann, wie unten näher erläutert, so durchgeführt werden, dass entweder eine Äquilibrierung stattfindet, bei der Struktureinheiten der Silane in die Kette des α,ω-Dihydroxypolyorganosiloxans eingebaut werden. Oder aber, und dies ist bevorzugt, die Umsetzung wird so durchgeführt, dass Kondensationsreaktionen zwischen endständigen OH-Gruppen des Polysiloxans und den Silanen stattfinden. Die zweite Variante, nämlich Kondensation, ist unter anderem deshalb bevorzugt, weil sie unter schonenderen Bedingungen, d.h. bei niedrigerer Temperatur durchgeführt werden kann als die Äquilibrierungsreaktion. Durch die genannten Umsetzungen entstehen Polyorganosiloxane, welche die aus den Silanen stammenden Einheiten R² enthalten.

Es sind prinzipiell 2 Arten von Umsetzungsmechanismen denkbar, nämlich eine Reaktionsführung, welche zu Äquilibrierungsreaktionen führt, oder eine Reaktionsführung, welche zu Kondensationsreaktionen führt. Bevorzugt ist es, die Umsetzung so durchzuführen, dass nur Kondensation stattfindet, aber keine Äquilibrierung. Die Kondensation läuft bei niedrigeren Temperaturen ab. Bei der Kondensation reagieren OR-Gruppen der dimeren bzw. oligomeren Silane mit endständigen OH-Gruppen des α,ω-Dihydroxypolysiloxans unter Abspaltung von Alkohol ROH und Kettenverlängerung.
Die Umsetzung lässt sich als Kondensation bei einer Temperatur im Bereich von 80 bis 105°C während 3 bis 4 Stunden durchführen, vorzugsweise unter vermindertem Druck, z.B. bei einem Druck im Bereich von 100 mbar. Einzelheiten über Kondenstionsreaktionen sind aus der Silikonchemie bekannt. Damit Kondensation überhaupt stattfinden kann, muß das verwendete Polysiloxan an mindestens zwei Kettenenden Hydroxygruppen aufweisen.

Äquilibrierungsreaktionen sind ebenfalls aus der Literatur über Silikonchemie gut bekannt. Bei der Äquilibrierung werden in die Polysiloxankette Silaneinheiten insertiert. Die Äquilibrierung erfordert also, dass Si-O-Si-Bindungen in der Kette gespalten werden. Hieraus erklärt sich, dass für Äquilibrierung höhere Temperaturen erforderlich sind als für Kondensation. Die Umsetzung bei welcher erfindungsgemäße Polysiloxane entstehen, führt man für den Fall, dass Äquilibrierung gewünscht wird, bei einer Temperatur im Bereich von 110 bis 135°C während einer Zeit von 3 bis 4 Stunden durch. Falls das Polyorganosiloxan der Formel (VIII) keine OH-Gruppen enthält, wird die Äquilibrierungsreaktion vorzugsweise in Anwesenheit von Wasser durchgeführt, um OR-Gruppen zu OH-Gruppen zu hydrolysieren.

Die Umsetzung, welche zu erfindungsgemäßen neuartigen Polyorganosiloxanen führt, wird vorzugsweise unter Mitverwendung eines Katalysators oder eines Gemischs von Katalysatoren durchgeführt, und zwar sowohl bei der Umsetzung in Form einer Kondensation als auch in Form einer Äquilibrierung.
Geeignete Katalysatoren sind aus der Silikonliteratur bekannt. In manchen Fällen können saure Katalysatoren angewendet werden, z.B. Lewis-Säuren oder verdünnte Mineralsäuren; im Normalfall sind jedoch basische Katalysatoren besser geeignet und daher bevorzugt. Gut geeignete basische Katalysatoren sind Alkalimetallhydroxide wie NaOH, KOH oder LiOH und insbesondere Metallalkoholate. Unter den Metallalkoholaten sind Alkalimetallalkoholate der Formel M(OR) besonders gut geeignet. Diese Metallalkoholate können z.B. als 20 bis 30 %ige Lösung in dem zugrundeliegenden Alkohol eingesetzt werden. Hierbei steht M für Na oder K und R für einen Alkylrest mit 1 bis 4 Kohlenstoffatomen.
Weitere geeignete Katalysatoren sind 4-Dimethylamino-pyridin und bicyclische Verbindungen, welche ein oder mehrere Stickstoffatome als Ringglieder enthalten. Beispiele sind 1.5-Diazabicyclo [2.2.2.]-octan, 1.5-Diazabicyclo [4.3.0]-non-5-en und 1.8-Diazabicyclo [5.4.0] undec-7-en. Diese Katalysatoren sind auch für die Umsetzung der Silane der Formel (I) mit Wasser geeignet.

Die erfindungsgemäßen neuartigen Polyorganosiloxane, welche durch Umsetzung der erfindungsgemäßen dimeren bzw. oligomeren Silane mit Polyorganosiloxanen der Formel (VIII) hergestellt werden können, lassen sich unter anderem gut für die Behandlung textiler Flächengebilde aus Fasermaterialien verwenden. Als Fasermaterialien kommen hierbei Gewebe, Gewirke oder nonwovens (Vliese) aus natürlichen oder synthetischen Fasern in Frage, wie z.B. aus Baumwolle, Polyester, Polypropylen oder Polyamid oder Gemischen solcher Fasern, wobei im Fall von Polypropylen eine Plasmavorbehandlung vorgeschaltet sein kann. Die Applikation kann z.B. mittels Foulard-Verfahren oder Besprühen erfolgen. Gegebenenfalls erfolgt die Applikation in Form einer Beschichtung. Die erfindungsgemäßen neuartigen Polyorganosiloxane eignen sich auch gut für die dem Fachmann bekannten Methoden der Vorhangbeschichtung (curtaincoating). Für den Fall, dass der in den Silanen der Formel (I) enthaltene Rest R² (Meth-) Acrylateinheiten aufweist, kann sich an die Vorhangbeschichtung ein Härtungs-(curing-) Vorgang anschließen, bei dem die Acrylateinheiten polymerisiert werden. Dies kann in bekannter Weise mittels Elektronenstrahlen oder durch UV-Strahlung bewirkt werden. Hierfür können bekannte Photoinitiatoren wie Produkte der Serie IRGACURE^{®} (Ciba Spezialitätenchemie, Basel, CH) verwendet werden oder Produkte, wie sie in der US-B1 6 211 308 (Spalte 10) genannt sind.

Die neuartigen erfindungsgemäßen Polysiloxane lassen sich auch zur Ausrüstung von Precursor-Fasern, z. B. Acrylfasern, bei der Herstellung von Kohlenstofffasern verwenden. Ferner können sie für die Modifikation von Epoxidharzen für verschiedenste Anwendungszwecke eingesetzt werden.

Die Erfindung wird nunmehr durch Ausführungsbeispiele veranschaulicht.

### Beispiel 1 (erfindungsgemäß): Herstellung eines dimeren Disilans

Zu 67,3 g 3-Glycidyloxypropylmethyldiethoxysilan wurden 31,6 g eines Polyetheramines (Jeffamin D 230) gegeben, auf 70°C aufgeheizt und bei dieser Temperatur für 8 Stunden gehalten. Es wurde ein leicht gelbliches klares Reaktionsprodukt erhalten, das der Formel (I) von Anspruch 1 entspricht mit R = CH₃, R¹ = CH₃ und wobei R² ein Rest der Formel (XVII) ist, mit A = direkte Bindung und R¹⁷ ein Rest wie oben definiert war. Anschließend werden zu 97,6 g dieses Produkts 2,4 g Wasser zugetropft, auf 85°C erhitzt und bei dieser Temperatur 4 Stunden gerührt. Das entstandene dimere Disilan war leicht gelblich und etwas viskos. Das Polyetheramin (Jeffamin D 230) besaß folgende Struktur: 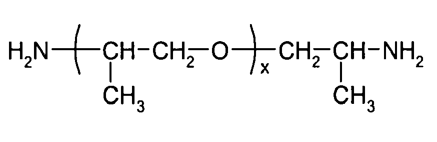 x besaß einen Wert von etwa 2,5.

### Beispiel 2: Addition von Acrylat an Aminosilan und Herstellung eines Silans der Formel (I)

51,0 g Si(CH₃)(OCH₃)₂(CH₂CH₂CH₂NHCH₂CH₂NH₂)
und
49,0 g Acrylsäureester
wurden unter Rühren miteinander vermischt (es entstand ein Produkt mit klarem Aussehen), auf 60°C erwärmt und 4 Stunden bei 60°C gehalten.
Man erhielt ein klares, beigefarbenes und viskoses Additionsprodukt = Silan der Formel (I) mit R = CH₃, R¹ = CH₃ und R² = ein Rest der Formel (XII) mit R⁴ = 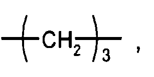 p = 1, R³ = H, R¹⁴ = Alkyl.

Der verwendete Acrylsäureester war ein Gemisch von Decyl- und Octyl-acrylat.

### Beispiel 3: (erfindungsgemäß)

97,8 g des erhaltenen Additionsproduktes (Silans) aus Beispiel 2
und
2,2 g Wasser
wurden unter Rühren miteinander vermischt (es entstand ein Produkt von klarem Aussehen), auf 85°C erwärmt und 4 Stunden unter leichtem Rückfluß bei 85°C gehalten.
Anschließend wurden unter Vakuum bis 200 mbar 7,7 g Methanol abdestilliert.
Man erhielt ein klares, leichtviskoses, dimeres Silan (Ausbeute 92,3 g).

## Patentansprüche

1. Dimere und/oder oligomere Silane, herstellbar durch
Umsetzung eines Silans der Formel (I) 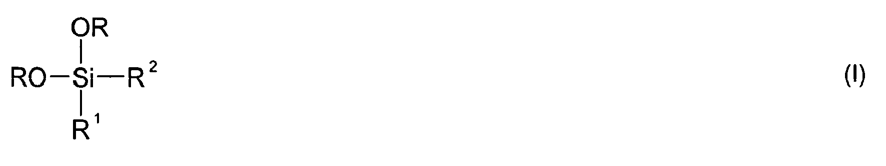 oder eines Gemischs solcher Silane, mit Wasser, oder eines Gemischs aus einem Silan der Formel (I) und einer Verbindung der Formel (la), mit Wasser,
X(OR¹⁵)₄ (Ia)
wobei X für Si oder Ti steht,
worin alle Reste R¹⁵ unabhängig voneinander für R oder für 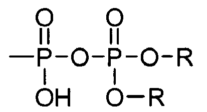 oder vorzugsweise für -CH(CH₃)₂ stehen,
wobei pro Mol Silan oder Silangemisch 0,5 bis 1,5 Mol Wasser verwendet werden, zu einem dimeren und/oder oligomeren Produkt, welches 2 bis 200, insbesondere 2 bis 50, besonders bevorzugt 2 bis 15, Siliciumatome im Molekül enthält, oder zu einem Gemisch solcher dimerer oder oligomerer Produkte,
wobei gegebenenfalls in einem ersten Schritt zuerst zwei gleiche oder unterschiedliche Silane der Formel (I) zu einem Dimeren oder Oligomeren miteinander umgesetzt werden und dann dieses Dimere oder Oligomere mit Wasser unter den oben genannten Bedingungen weiter umgesetzt wird,
wobei alle anwesenden Reste R unabhängig voneinander für den Phenylrest oder für einen verzweigten oder unverzweigten Alkylrest mit 1 bis 18 Kohlenstoffatomen, vorzugsweise für CH₃ oder C₂H₅ stehen,
R¹ für R oder OR oder für 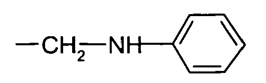 steht,
worin R² für einen Rest einer der Formeln (XI), (XIa) oder (XII) bis (XX) oder der Formel (XVIIIa) oder Formel (XXa) oder Formel (XXb) oder Formel (XXc) steht, 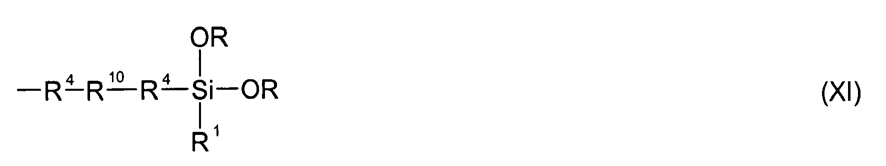 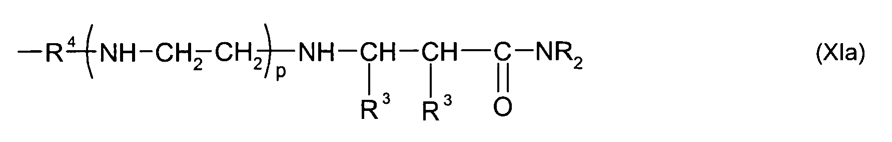 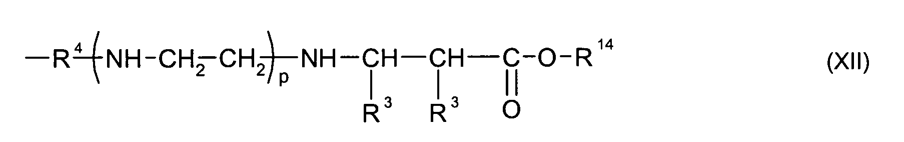 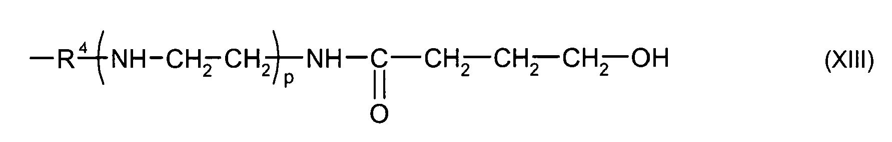 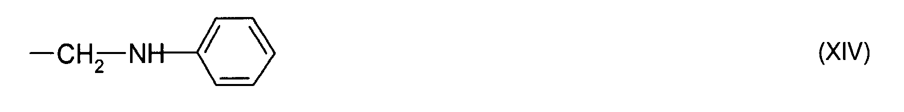 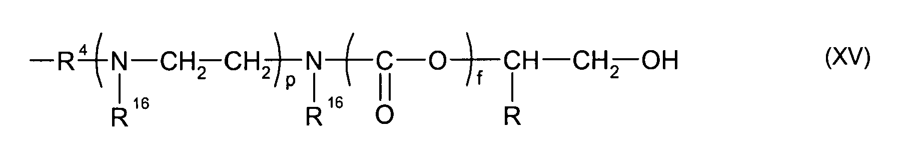 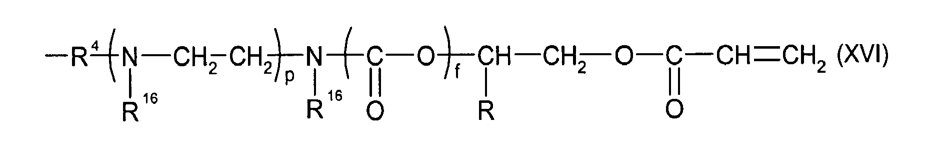 wobei p für 0, 1 oder 2 steht,
R⁴ für einen zweiwertigen linearen oder verzweigten Kohlenwasserstoffrest mit 1 bis 4 Kohlenstoffatomen steht,
R³ jeweils für H oder CH₃ steht,
R¹⁴ für H oder einen linearen oder verzweigten Alkylrest mit 1 bis 18 Kohlenstoffatomen oder für einen Rest der Formel (XIX) steht,
worin die einzelnen Einheiten -(CH₂-CH₂-O)- und -(CHR³-CHR³-O)- beliebig über die Kette verteilt sein können, worin k und I jeweils eine Zahl im Bereich von 1 bis 22 sind und die Summe k+l im Bereich von 3 bis 25 liegt,
worin f für 0 oder 1 steht,
alle Reste R¹⁶ unabhängig voneinander für H oder für 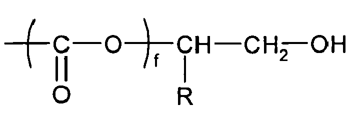 oder für 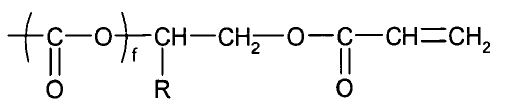 stehen, 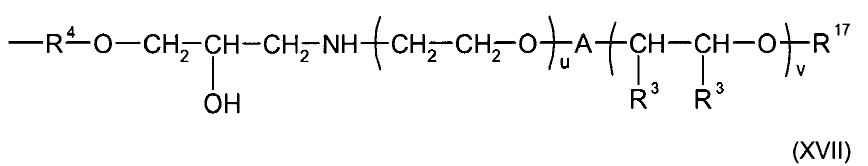 worin A für eine direkte Bindung oder für einen zweiwertigen Rest der Formel 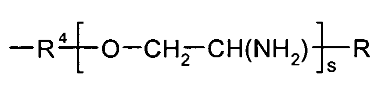 steht, wobei die Werte von u, v und s so gewählt sind, dass das Äquivalentgewicht dieses Restes R² im Bereich von 100 bis 5000 liegt, wobei eine oder zwei der Einheiten u, v und s auch den Wert 0 annehmen können und wobei die einzelnen Einheiten -CH₂-CH₂-O-und 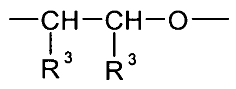 beliebig über die Kette verteilt sein können,
wobei R¹⁷ für R oder für -R⁴-NH₂ oder für 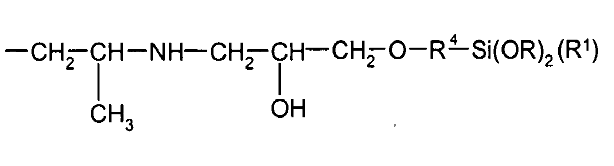 steht, 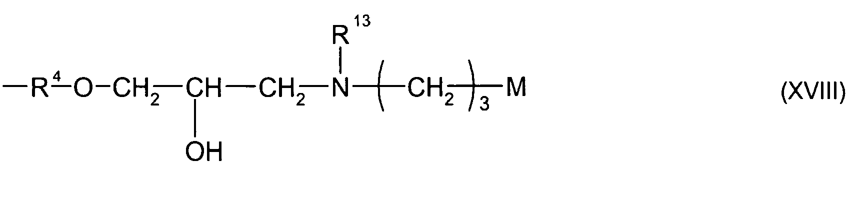 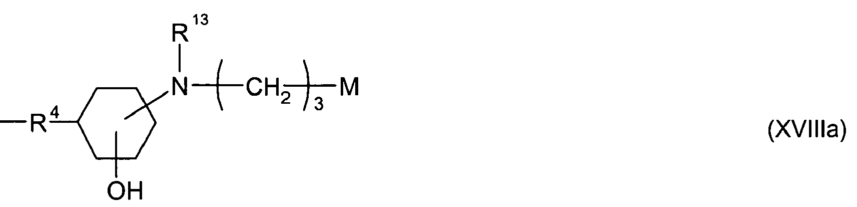 wobei M ausgewählt ist aus 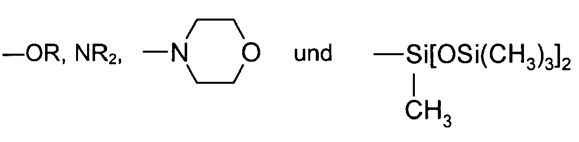 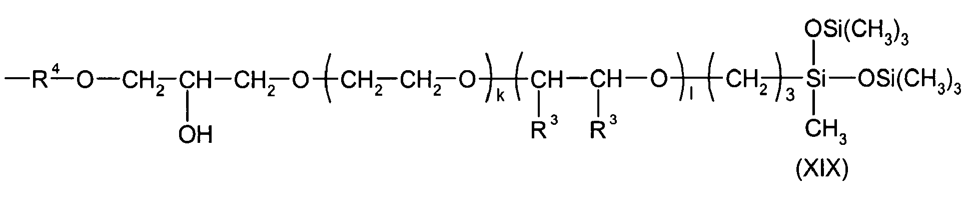 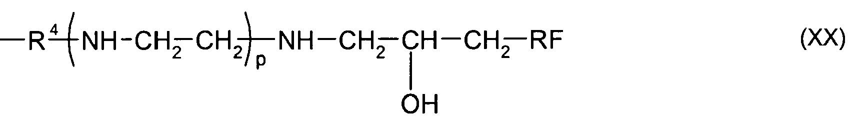 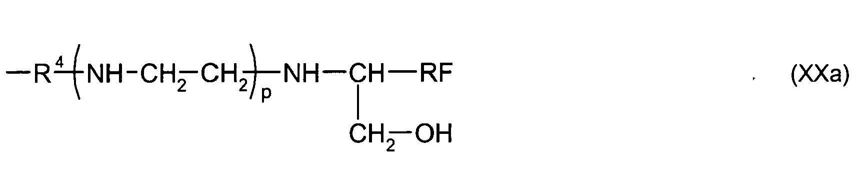 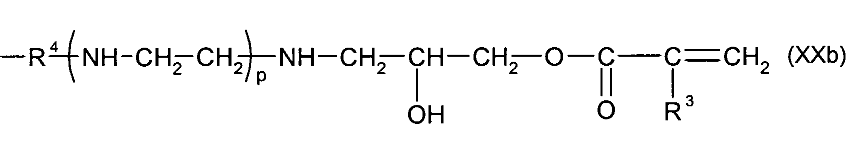 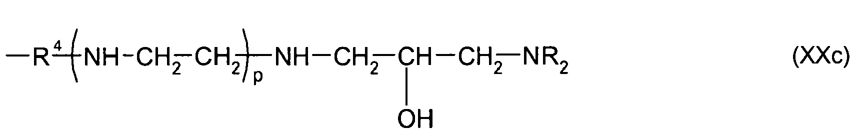 worin RF für einen Perfluoralkylrest mit 5 bis 23 Kohlenstoffatomen steht,
worin R¹⁰ für einen zweiwertigen Rest einer der Formeln (XXI) bis (XXIVa) steht, 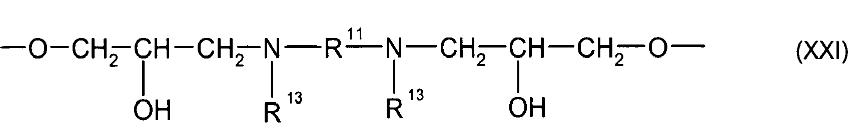 worin R¹³ für H oder -CH(CH₃)₂ oder für -CH₂-CH(CH₃)₂ steht, 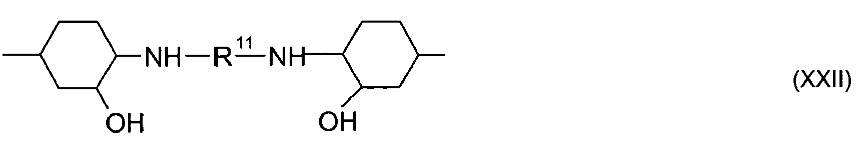 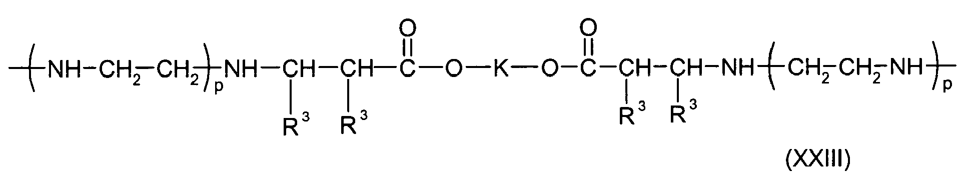 worin K für einen linearen oder verzweigten Alkylenrest mit 2 bis 18 Kohlenstoffatomen steht, 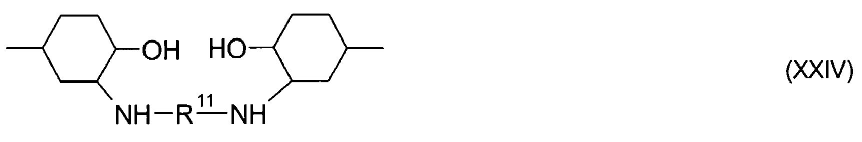 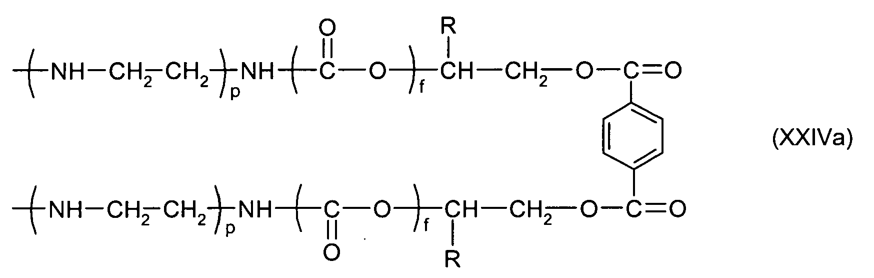 worin f für 0 oder 1 steht
wobei jeder der Reste R¹¹ für 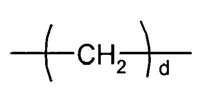 worin d eine Zahl von 1 bis 6 ist,
oder für einen Rest einer der Formeln (XXV) bis (XXXI) steht, 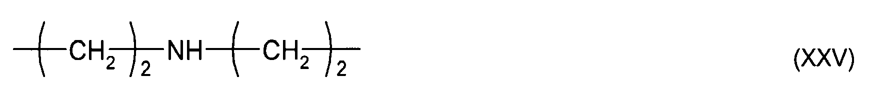 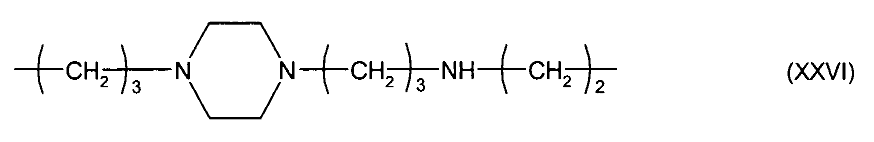 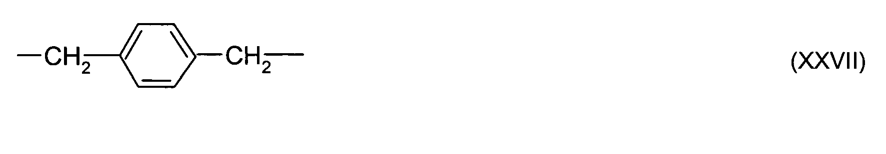 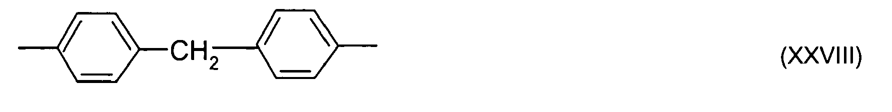 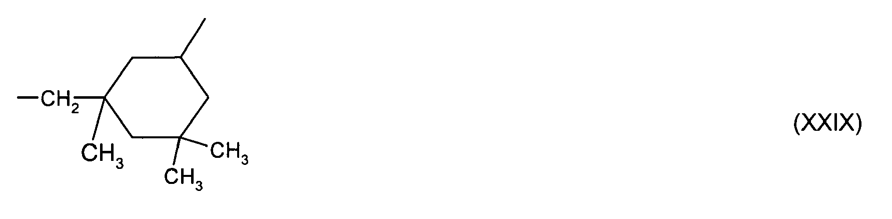 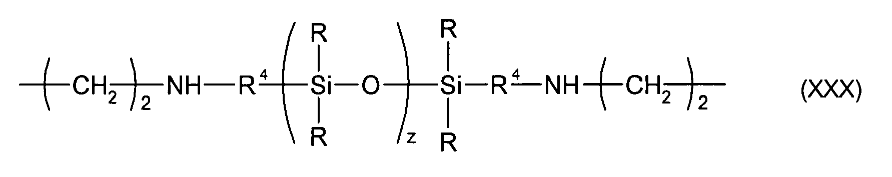 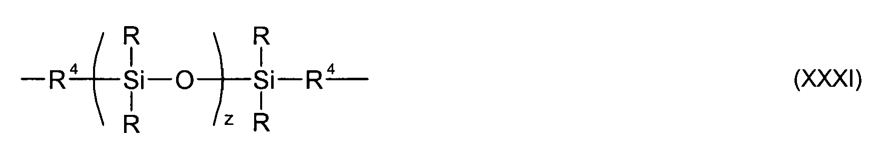 worin z eine Zahl von 8 bis 500, vorzugsweise von 8 bis 20, ist,
wobei alle oder ein Teil der Stickstoffatome, welche in den oben genannten Formeln vorhanden sind und die nicht Teil einer Amidgruppe sind, in quaternisierter Form vorliegen können.

2. Silan nach Anspruch 1, **dadurch gekennzeichnet, dass** ein Silan der Formel (I) verwendet wird, bei dem alle anwesenden Reste R unabhängig voneinander für -CH₃ oder -CH₂CH₃, vorzugsweise für -CH3 stehen.

3. Polyorganosiloxane, herstellbar durch Umsetzung eines dimeren und/oder oligomeren Silans gemäß Anspruch 1 oder 2 oder eines Gemischs solcher Silane mit einem Organosiloxan der Formel (VIII) oder mit Gemischen solcher Organosiloxane, 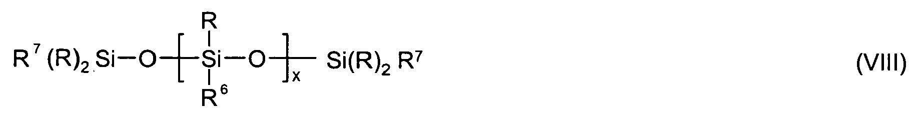 wobei R⁶ für R oder für einen Rest der Formel (IX) steht 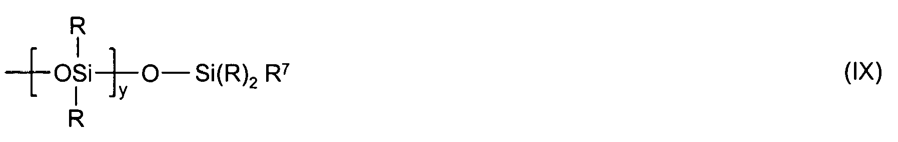 wobei x eine Zahl von 0 bis 1500 ist, vorzugsweise von 10 bis 1500,
y eine Zahl von 0 bis 500 ist,
wobei alle anwesenden Reste R⁷ für R oder OH oder OR stehen, wobei das Organosiloxan der Formel (VIII) vorzugsweise mindestens einen Rest R⁷ enthält, der für eine Hydroxygruppe steht.

4. Polyorganosiloxan nach Anspruch 3, **dadurch gekennzeichnet, dass** für die Umsetzung ein Organosiloxan der Formel (VIII) verwendet wird, bei dem zwei der anwesenden Reste R⁷ jeweils für eine OH-Gruppe stehen und dass die Umsetzung bei einer Temperatur im Bereich von 80 bis 120°C durchgeführt wird.

5. Polyorganosiloxan nach Anspruch 3 oder 4, **dadurch gekennzeichnet, dass** das Organosiloxan und das dimere oder oligomere Silan in solchen Mengenverhältnissen eingesetzt werden, dass pro Siliciumatom des Organosiloxans 0,001 bis 5 Siliciumatome des dimeren oder oligomeren Silans zum Einsatz kommen.

6. Verwendung der Polyorganosiloxane gemäß einem oder mehreren der Ansprüche 3 bis 5 zur Behandlung oder Beschichtung von textilen Flächengebilden oder von Fasern.
